# EUROPÄISCHE PATENTSCHRIFT

(11) **EP 1 888 284 B1**
(45) Veröffentlichungstag und Bekanntmachung des Hinweises auf die Patenterteilung: **27.05.2009**
(21) Anmeldenummer: 06723894.9
(22) Anmeldetag: 31.03.2006
(51) Int. Cl.: B23D 31/00, B23D 33/02, B21D 43/28

(54) **VORRICHTUNG UND VERFAHREN ZUR PROBENNAHME**
SAMPLING DEVICE AND METHOD
PROCEDE ET DISPOSITIF D'ÉCHANTILLONNAGE

(30) Priorität: 21.04.2005 AT 6732005
(43) Veröffentlichungstag der Anmeldung: 20.02.2008
(73) Patentinhaber: Siemens VAI Metals Technologies GmbH & Co, 4031 Linz (AT)
(72) Erfinder: MOSER, Friedrich, A-4202 Hellmonsödt (AT); GATTERBAUER, Roland, A-4020 Linz (AT); SCHIEFER, Jürgen, A-4030 Linz (AT); RAB, Werner, A-4492 Hofkirchen (AT)
(74) Vertreter: Maier, Daniel Oliver
(86) Internationale Anmeldenummer: PCT/EP2006/002933
(87) Internationale Veröffentlichungsnummer: WO 2006/111259

(56) Entgegenhaltungen:
- EP-A- 0 044 923
- EP-A- 0 761 362

## Beschreibung

Die Erfindung betrifft eine Vorrichtung und ein Verfahren zum Schopfen der Enden oder zum Abtrennen von Probestücken von zu Bunden gewickeltem Walzband, umfassend eine Schere, eine erste und eine zweite Bodenrolle, deren parallel angeordnete Achsen eine im wesentlichen horizontale Ebene bilden, zur Aufnahme eines Bundes mit horizontal ausgerichteter Bundachse, wobei der Abstand der Achsen kleiner als der kleinste Bunddurchmesser ist, und zumindest einer lageeinstellbaren Andrückrolle.

Bei der Herstellung gewalzter Bänder ist es üblich, diese ungeschnitten zu Bunde zu wickeln und für die weitere Verarbeitung bereitzustellen. Dabei stellt sich häufig die Notwendigkeit die zu Bunde gewickelten Bänder zu inspizieren bzw. zu beproben, also Probestücke von den Bunden zu entnehmen.

Aus dem Stand der Technik ist eine Vielzahl von Vorrichtungen zur Probennahme von zu Bunden gewickelten Bändern bekannt. Dabei haben sich Vorrichtungen durchgesetzt, die eine Probe von den äußeren Windungen des Bundes entnehmen.

Aus der EP 0044923 B1 ist beispielsweise eine Vorrichtung zur Probennahme von einem zu einem Bund gewickelten Band zu entnehmen. Dabei liegt der Bund auf zwei Lagerrollen. Die äußere Windung wird durch einen Bundöffner und Führungseinrichtungen in senkrechter Lage einer Schere zugeführt. Nachteilig ist dabei vor allem, dass die freie Bandlänge, die das Band von der in Drehrichtung gesehen hinteren Lagerrolle bis zu den Führungseinrichtungen bzw. zur Schere zurücklegt sehr groß ist, sodass eine ausreichende Führung des freien Bandendes nicht sicher gegeben ist. Insbesondere bei dickeren und festen Bändern kann dies zu Störungen führen bzw. die Probennahme erschweren. Aufgrund der Lage der geschnittenen Probe ist auch eine Inspektion nicht ohne weiteres möglich.

Ausgehend vom Stand der Technik ist es eine Aufgabe der Erfindung eine Vorrichtung und ein Verfahren zur Verfügung zu stellen, die eine sichere Probennahme bzw. ein Schopfen von zu Bunden gewickelten Bändern ermöglichen, wobei auch bei höher festen bzw. dicken Bändern eine sichere Lösung geboten werden soll.

Die Aufgabe wird entsprechend der erfindungsgemäßen Vorrichtung nach Anspruch 1 und dem erfindungsgemäßen Verfahren nach Anspruch 15 gelöst.

Die erfindungsgemäße Vorrichtung sieht zwei Bodenrollen vor, wobei eine Bodenrolle verstellbar ausgeführt ist. Bodenrollen dienen im Wesentlichen zur Lagerung von Bunden, die mit ihrer Mantelfläche drehbar gelagert auf den Bodenrollen abgestützt werden sollen. Dabei wird zumindest eine der Bodenrollen angetrieben ausgeführt, sodass der Bund um seine Achse drehbar gelagert ist. Das Bandende muss stets durch eine der Rollen fixiert sein, um ein unerwünschtes Aufspringen des Bundes zu vermeiden. Um eine Probe entnehmen zu können, ist es nötig den Bund zu öffnen und ein Stück des Bandendes vom Bund abzuziehen. Dabei muss, insbesondere bei höher festen oder auch bei dicken Bändern, eine erhebliche Verformungsarbeit geleistet werden, da das abgezogene Bandende aufgebogen bzw. annähernd gerade gerichtet werden muss, um einer Schere oder einer Inspektionseinrichtung zugeführt werden zu können. Die zu leistende Verformung ist umso höher, je enger der Biegeradius ist. Somit ist es vorteilhaft die freie Bandlänge zwischen einem Auflagepunkt des Bundes und dem Bundöffner zu vergrößern, dabei aber dennoch stets eine sichere Führung des Bundes und des Bandendes zu jedem Zeitpunkt der Probennahme zu ermöglichen. Gleichzeitig ist es möglich, unmittelbar nach der Probennahme eine Inspektion der Probe vorzunehmen.

Aufgrund der vergrößerten freien Bandlänge zwischen der verbleibenden Bodenrolle und der Andrückrolle ist die lokale Deformation des Bandendes geringer, ohne dass dabei die Gefahr eines aufspringenden oder gelockerten Bundes droht, wobei sich z.B. die äußeren Windungen lockern könnten. Gleichzeitig können aber in einfacher Weise auch dicke Bänder oder auch solche mit einem hohen Verformungswiderstand sicher geöffnet werden und das Bandende sicher vom Bund abgezogen und eine Proben genommen werden. Aufgrund der vorteilhaften Führung des Bundes zwischen zumindest zwei Rollen, ist auch stets eine stabile Lage des Bundes gegeben, die auch für die Drehpositionierung des Bundes nötig ist. Es ist aber auch denkbar mehr als eine Andrückrolle vorzusehen, um den Bund noch stabiler zu führen.

Bei Lösungen mit zwei fix installierten Bodenrollen muss der Rollenabstand derart gewählt werden, dass auch beim kleinsten zu erwartenden Bunddurchmesser noch eine sichere Lagerung des Bundes gegeben ist. Aufgrund der technisch üblichen minimalen und maximalen Bunddurchmesser, muss bei der Wahl des Abstandes der fix installierten Bodenrollen immer ein nachteiliger Kompromiss in Kauf genommen werden, sodass ein Rollenabstand für alle Bunddurchmesser verwendet werden muss. Dieser Nachteil wird durch die erfindungsgemäße Vorrichtung insbesondere durch die lageeinstellbare Andrückrolle beseitigt.

Entsprechend einer vorteilhaften Ausgestaltung der erfindungsgemäßen Vorrichtung ist der Bogenabschnitt zwischen den Berührungslinien an der Bundmantelfläche der ersten Bodenrolle und der Andrückrolle größer 90°, insbesondere 120°, ausgeführt. Diese vorteilhafte Ausgestaltung bietet eine besonders stabile Führung des Bundes und ermöglicht ein einfacheres Abziehen des Bandendes.

Durch die Kombination der verbleibenden Bodenrolle mir zwei lageeinstellbaren Andrückrollen wird eine weitere vorteilhafte Lösung gefunden, sodass der Bund durch drei Rollen am Umfang gehalten wird, wobei eine vorteilhafte Teilung durch einen Bogenwinkel jeweils zwischen der Bodenrolle und den Andrückrollen von etwa 120° gewählt werden kann. Diese Anordnung kann jedoch entsprechend den Bedürfnissen und der Lagesituation auch angepasst werden. Es ist auch denkbar die Bogenwinkel zwischen der oder den lageeinstellbaren Andrückrollen relativ zur Bodenrolle zu verändern, wobei z.B. der anderen Geometrie aufgrund eines geänderten Bunddurchmessers Rechnung getragen werden kann.

Nach einer weiteren möglichen Ausgestaltung der erfindungsgemäßen Vorrichtung ist ein Öffnungsschwert zum Öffnen des Bundes vorgesehen. Bei geschlossenen Bunden, kann es unter Umständen vorkommen, insbesondere bei deformiertem oder beschädigtem Bandende, dass das Bandende nicht ohne weiteres vom Bund ablösbar ist. Durch den Einsatz eines Öffnungsschwertes kann das Bandende jedoch auch in solchen Fällen sicher abgelöst werden.

Eine besonders vorteilhafte Ausgestaltung der erfindungsgemäßen Vorrichtung wird dadurch erreicht, dass das Schwert verstellbar ist, wobei die Drehachse des Schwertes mit der Drehachse der Andrückrolle zusammenfällt. Durch die Anstellbarkeit lässt sich das Schwert optimal positionieren, sodass der Bund sicher geöffnet und dabei die nächst inneren Windungen des Bundes nicht beschädigt werden. Dabei hat es sich als einfache und vorteilhafte Lösung erwiesen, die Achse, um die die Verstellung des Schwertes erfolgt, mit der Achse der Andrückrolle zu kombinieren. Zusätzlich wird damit eine einfachere und stabile Lagerung des Schwertes unter Nutzung der massiven Trägerkonstruktion der Andrückrolle erreicht.

Eine bevorzugte Ausgestaltung der erfindungsgemäßen Vorrichtung sieht eine schwenkbare Führungseinrichtung, die zumindest eine Führungsrolle aufweist, zur Führung des Bandendes zur Schere und zur Verlagerung des Bandendes vor. Aufgrund der gewichtsbedingten massiven Ausführung von Vorrichtungen zur Verarbeitung von Bunden ergibt sich ein baulicher Mindestabstand zwischen dem Bund und der Schere, sodass Einrichtungen vorgesehen werden müssen, um das Bandende vom Bund zur Schere zu führen. Durch den Einsatz einer schwenkbaren Führungseinrichtung mit zumindest einer Führungsrolle, kann das nun abgezogene lose Bandende der Schere zugeführt werden, wobei das Bandende zumeist verformt und hinsichtlich seiner Lage geführt wird, da es nach dem Abziehen ja noch gekrümmt oder auch ungleichmäßig deformiert ist. Durch die Führungseinrichtung können so stecken gebliebene Bandenden oder auch Beschädigungen durch Kollision eines verbogenen Bandendes mit einem Teil der Schere sicher vermieden werden.

Eine alternative Ausführungsform der erfindungsgemäßen Vorrichtung sieht vor, dass die Führungseinrichtung eine anstellbare Führungsplatte zur Führung des Bandendes umfasst. Um auch bei dünneren Bändern eine sichere Führung zu gewährleisten, ist es nötig, entsprechende Leiteinrichtungen vorzusehen, um so hängen gebliebene Bänder oder auch Schäden als Folge daraus, sicher zu vermeiden. Bei dünnen oder weicheren Bändern kann dabei das Absinken unter dem eigenen Gewicht abgefangen und das Bandende der Führungseinrichtung zugeführt werden.

Eine weitere alternative Ausführungsform der erfindungsgemäßen Vorrichtung umfasst ein anstellbares Führungselement, zur Führung des Bandendes an dessen Oberseite. Das Führungselement stellt insbesondere in Verbindung mit der Führungseinrichtung eine sehr robuste Vorrichtung zur Führung des Bandendes dar. Durch die Kombination mit Rollen wird eine reibungsarme Führung des Bandes bei dicken wie auch dünnen Bändern ermöglicht.

Nach einer weiteren vorteilhaften Ausgestaltung der erfindungsgemäßen Vorrichtung ist zumindest eine lageeinstellbare Treibrolle vorgesehen, die zusammen mit einer Führungsrolle ein Treibrollenpaar, mit im Wesentlichen parallel zueinander liegenden Achsen zum Transport bzw. zur Fixierung des Bandendes bildet. Um eine noch bessere Führung des Bandendes zu gewährleisten, wird eine Treibrolle vorgesehen, sodass das Bandende durch die Treiberfunktion geführt werden kann. Bei höherfesten Bändern kann es zu sehr erheblichen elastischen Rückfederungen kommen, die neben einer Störung bei der Probennahme, aufgrund der hohen wirkenden Kräfte, auch sehr erhebliche Schäden verursachen bzw. auch eine Gefahr für das Bedienpersonal darstellen kann. Durch die Führung zwischen der Führungs- bzw. der Treiberrolle ist einerseits ein Rückfedern ausgeschlossen und eine Klemmung zwischen den Rollen möglich. Des Weiteren kann das Rollenpaar einem Treiber entsprechend auch die Führung bzw. den Vorschub des Bandendes in die Schere sehr genau steuern, sodass eine Probennahme positionsgenau möglich ist.

Entsprechend einer weiteren möglichen Ausgestaltung der erfindungsgemäßen Vorrichtung sind die Führungsrolle und/ oder die Treibrolle in einer Richtung normal zur Ebene, gebildet aus ihren Drehachsen, lageeinstellbar. Dabei kann die geänderte geometrische Situation bedingt durch den Achsversatz zur Änderung der Krümmung des Bandendes genutzt werden. Aufgrund der nun relativ zum Bandende gekippten Ebene kann eine gewünschte Deformation auf das Bandende aufgebracht werden und dabei dessen Krümmung beeinflusst werden. Somit kann das Bandende auf die Probennahme vorbereitet werden, sodass der Schnitt in der Schere problemlos erfolgt und ein bereits für die Inspektion oder für eine weitere Beprobung vorbereitetes Probenstück vorliegt.

Eine vorteilhafte Ausgestaltung der erfindungsgemäßen Vorrichtung sieht vor, dass die Führungsrolle und/ oder die Treibrolle in der Ebene, gebildet aus ihren Drehachsen, lageeinstellbar sind. Damit ist es möglich, durch eine Änderung des Spaltes zwischen den Rollen, eine Beeinflussung der seitlichen Lage des Bandendes zu erzielen. Aufgrund der Kippung einer oder beider Rollen kann der Spalt zwischen den Rollen und damit die Kraft auf das Bandende verändert werden, sodass ein Lenkeffekt, der in etwa parallel zu den Rollenachsen gerichtet ist, erzielt werden kann. Durch diesen Lenkeffekt kann das Bandende noch besser zur bzw. in die Schere geführt werden.

Durch Kombination der Schwenkfunktion in der Ebene, gebildet aus den Achsen der Führungs- bzw. der Treibrolle, und normal dazu wird eine noch bessere Beeinflussung der Form und der Lage des Bandendes erreicht.

Nach einer vorteilhaften Ausgestaltung der erfindungsgemäßen Vorrichtung weisen die Führungsrolle und/ oder die Treibrolle einen Drehantrieb auf. Aufgrund des Antriebs kann das Bandende definiert gefördert und eine Zugspannung im Bandende aufgebracht werden. Des Weiteren kann das Bandende genau in die Schere eingebracht und positioniert werden.

Nach einer möglichen Ausgestaltung der erfindungsgemäßen Vorrichtung ist die Treibrolle schwenkbar um eine Achse gelagert ist, wobei die Achse an der Führungseinrichtung fixiert ist. Die Kombination der Treibrolle und seiner Montierung an der Führungseinrichtung ergibt eine besonders einfache Ausgestaltung, die sich vor allem durch seine Robustheit auszeichnet und eine aufwändige Nachführung bei Positionierung der Rollen nicht nötig macht. Damit folgt auch eine wesentlich kostengünstigere und einfachere Automation für die Betätigung der Rollen.

Eine vorteilhafte Ausgestaltung der erfindungsgemäßen Vorrichtung sieht vor, dass die Führungsrolle derart verstellbar ist, dass das Bandende gegen die lagefixierte und vom Bund abgehobene Anstellrolle gedrückt und dabei eine Krümmung, die im wesentlichen der Krümmung der äußeren Windung des Bundes entspricht, einstellbar ist. Aufgrund der Positionierbarkeit der Andrückrolle, kann diese in eine definierte Lage gebracht und in dieser Lage auch verriegelt, also hinsichtlich ihrer Lage fixiert werden. Die Andrückrolle kann als Gegenlager zur Deformation des Bandendes genutzt werden. Um eine Deformation einzustellen, wird das Bandende mittels der Führungsrolle gegen die als Anschlag wirkende Andrückrolle gedrückt und dabei eine definierte Deformation des Bandendes herbeigeführt. Diese wird üblicherweise derart durchgeführt, dass dem Band eine Krümmung aufgeprägt wird, die im Wesentlichen der Krümmung einer Außenwindung des Bundes entspricht. Eine derartige Maßnahme ist von großer Bedeutung, da ein nicht geschlossener Bund oder auch ein abstehendes Bandende zu erheblichen Nachteilen beim Bundhandling, also bei der weiteren Verarbeitung führen kann.

Nach einer alternativen Ausgestaltung der erfindungsgemäßen Vorrichtung ist ein Anschlag an der Schere als Gegenlager zum Krümmen des Bandendes vorgesehen. Insbesondere bei sehr festen aber auch bei dicken Bändern hat es sich als eine wirksame Lösung herausgestellt unter Verwendung der Führungseinrichtung und eines massiven Anschlages, der an der Schere oder in dessen Bereich angeordnet ist, die Krümmung des Bandendes zu verändern.

Das erfindungsgemäße Verfahren zum Schopfen der Enden oder zum Abtrennen von Probestücken von zu Bunden gewickeltem Walzband, schafft aufgrund der absenkbaren Bodenrolle die Möglichkeit auch höherfeste oder dickere Bänder oder auch mit einer Kombination dieser Eigenschaften verarbeiten zu können, wobei ein effizientes und sicheres Verfahren geschaffen wird. Das Verfahren geht dabei von einem geschlossenen Bund aus und endet wiederum mit einem geschlossenen Bund und einer Probe, die einer weiteren Inspektion oder Beprobung zugeführt werden kann. Aufgrund der absenkbaren Bodenrolle wird der Abstand der Berührungspunkte zwischen der ersten Bodenrolle und der Andrückrolle vergrößert, sodass die freie Länge zwischen der Bodenrolle und der Andrückrolle deutlich größer wird, als dies bei einer Lagerung auf zwei Bodenrollen der Fall wäre. Aufgrund der größeren freien Länge, die die Biegelänge darstellt, um die das Bandende beim Öffnen gebogen wird, können nunmehr auch schwierig zu verformende Bänder vom Bund abgezogen werden, wobei gleichzeitig aber stets eine sehr gute Führung des Bandendes und des Bundes sichergestellt ist. Durch das Verfahren, kann der Produktmix, der üblicherweise mit einem Verfahren an einer Vorrichtung verarbeitet werden muss, deutlich erweitert werden, sodass keine Sonderverfahren oder Vorrichtungen für schwieriger zu verformende Bunde nötig sind. Die Inspektion des Bandes bzw. des abgetrennten Probenstückes kann in vorteilhafter Weise unmittelbar erfolgen.

Eine vorteilhafte Ausgestaltung des erfindungsgemäßen Verfahrens sieht vor, dass die Krümmung des Bandendes mittels einer Führungseinrichtung verändert und das Bandende im Wesentlichen gerade gerichtet wird. Aufgrund der vorliegenden Krümmung der Außenwindungen am Bund, ist es schwierig, das Bandende zur Schere zu führen. Darüber hinaus kommt es häufig vor, dass das Bandende, von dem eine Probe genommen werden soll, nicht eng am Bund anliegt, sondern undefiniert verformt ist, z.B. aufgrund eines Fehlers beim Handling des Bundes oder in einem vorhergehenden Verarbeitungsschritt. Des Weiteren ist es für die Verarbeitung in der Schere und für die weitere Beprobung des abgetrennten Stückes von Vorteil, wenn dieses keine oder nur eine sehr geringe Krümmung aufweist. Durch die kombinierte Funktion der Führungseinrichtung, die gleichzeitig auch für die Verformung des Bandendes herangezogen wird, kann eine unmittelbare Zufuhr des Bandendes zur Schere erreicht werden, sodass kein Zwischenschritt nötig ist.

Nach einer alternativen Ausgestaltung des erfindungsgemäßen Verfahrens wird das Bandende in der Führungseinrichtung geführt und durch Schwenken der Führungseinrichtung der Schere zugeführt. Die schwenkbare Führungseinrichtung gestattet eine Positionierung des Bandendes derart, dass für die Schere eine optimale Schnittposition sichergestellt wird. Des Weiteren lassen sich gegebenenfalls auch elastische Deformationen in gewünschter Weise ausgleichen bzw. zumindest stark vermindern.

Nach einer vorteilhaften Ausgestaltung des erfindungsgemäßen Verfahrens weist die Führungseinrichtung eine Treiberfunktion auf, sodass das Bandende zur Schere geführt bzw. gefördert wird. Es hat sich als vorteilhaft erwiesen, bei weicheren oder bei dünneren Materialien durch Aufbringen eines Zuges auf das Bandende eine verbesserte Zufuhr des Bandendes zur Schere sicherzustellen. Aufgrund der Treiberwirkung ist das Bandende geführt, sodass dieses auch in der Schere wesentlich genauer positioniert werden kann, als dies nur durch eine Drehung des Bundes möglich wäre. Ebenso wird durch die Treiberwirkung der Führungseinrichtung sichergestellt, dass auch höherfeste Bandenden sicher geführt werden und so Schäden aufgrund von elastischen Dehnungen, die sich bei Lösung der Führung spontan entspannen können, sicher vermieden werden.

Entsprechend einer geeigneten Ausgestaltung des erfindungsgemäßen Verfahrens wird das Bandende nach dem Schneiden, soweit wieder aufgewickelt, dass eine offene Länge des Bandendes verbleibt, die im Wesentlichen der Länge der Führungseinrichtung entspricht. Um die Führungseinrichtung zur Deformation des Bandendes nach dem Schneiden und vor dem Aufwickeln voll ausnützen zu können, wird das Bandende nur soweit wieder auf den Bund gewickelt, dass das verbleibende Bandende durch die Führungseinrichtung vor dem Aufwickeln verformt werden kann. Aufgrund der verbleibenden Länge ist es möglich, das Bandende weitgehend der Krümmung des Bundes anzupassen, sodass nach der Probennahme wieder ein geschlossener Bund vorliegt.

Gemäß einer vorteilhaften Ausgestaltung des erfindungsgemäßen Verfahrens erfolgt am abgeschnittenen Bandende unmittelbar eine Oberflächeninspektion. Aufgrund der Möglichkeit das Band hinsichtlich seiner Form zu beeinflussen und der weitgehend waagerechten Lage der Probe, kann diese unmittelbar im Anschluss an den Probenschnitt inspiziert werden, wobei in vorteilhafter Weise auch Wendevorrichtungen für das Probenstück vorgesehen werden, damit das Band beidseitig inspiziert werden kann.

Nach einer vorteilhaften Ausgestaltung des erfindungsgemäßen Verfahrens wird das Bandende nach der Probennahme durch Schwenken der Führungseinrichtung angehoben, zwischen Führungsrolle und Treibrolle geklemmt und unmittelbar daran die zweite Bodenrolle angehoben. Über die Führungsrolle und Treibrolle und/ oder durch Zurückdrehen des Bundes kann ein Bandzug aufgebracht werden. Durch das Anheben des Bandendes und durch das Klemmen im Bereich der abgesenkten Bodenrolle wird das Bandende fest an den Bund angelegt. Im Anschluss daran wird die Bodenrolle angehoben und fest an den Bund gedrückt, sodass der Bund nun wieder auf beiden Bodenrollen liegt. Um sicherzustellen, dass das Bandende vor dem Anheben der Bodenrolle fest anliegt, kann das Bandende mittels der Führungs- und Treibrolle geklemmt werden. Beschädigungen der äußeren Windungen werden derart wirksam verhindert.

Eine weitere vorteilhafte Ausgestaltung des erfindungsgemäßen Verfahrens sieht vor, dass das Bandende vor dem Aufwickeln mittels der Führungsrolle um die vom Bund abgehobene und lagefixierte Andrückrolle gekrümmt wird, sodass dabei eine Krümmung, insbesondere der Krümmung der äußeren Windung des Bundes entsprechend, einstellbar ist. Da das Bandende für die Probennahme und den Schnitt in der Schere deformiert und weitgehend gerade gerichtet wurde, ist eine Deformation des Bandendes nötig, da sonst, insbesondere bei höherfesten Bändern, die äußeren Windungen nicht anliegen würden. Durch die gezielte Deformation mittels der Führungsrolle, die das Bandende gegen die Andrückrolle drückt, kann eine Krümmung aufgebracht werden, die der Krümmung der Außenwindungen des Bundes entspricht. Durch diese Maßnahme kann sichergestellt werden, dass der Bund kein abstehendes Bandende aufweist und das weitere Bundhandling entsprechend den Anforderungen erfolgen kann.

Die erfindungsgemäße Vorrichtung wird anhand der Figuren beispielhaft aber nicht einschränkend dargestellt.
Fig. 1 zeigt die erfindungsgemäße Vorrichtung beim Abwickeln
Fig. 2 zeigt die erfindungsgemäße Vorrichtung beim Einfädeln des Bandendes in die Schere.
Fig. 3 zeigt die erfindungsgemäße Vorrichtung beim Aufwickeln des Bandendes auf den Bund.
Fig.: 4 zeigt eine alternative erfindungsgemäße Vorrichtung zur Zufuhr des Bandendes zur Schere.

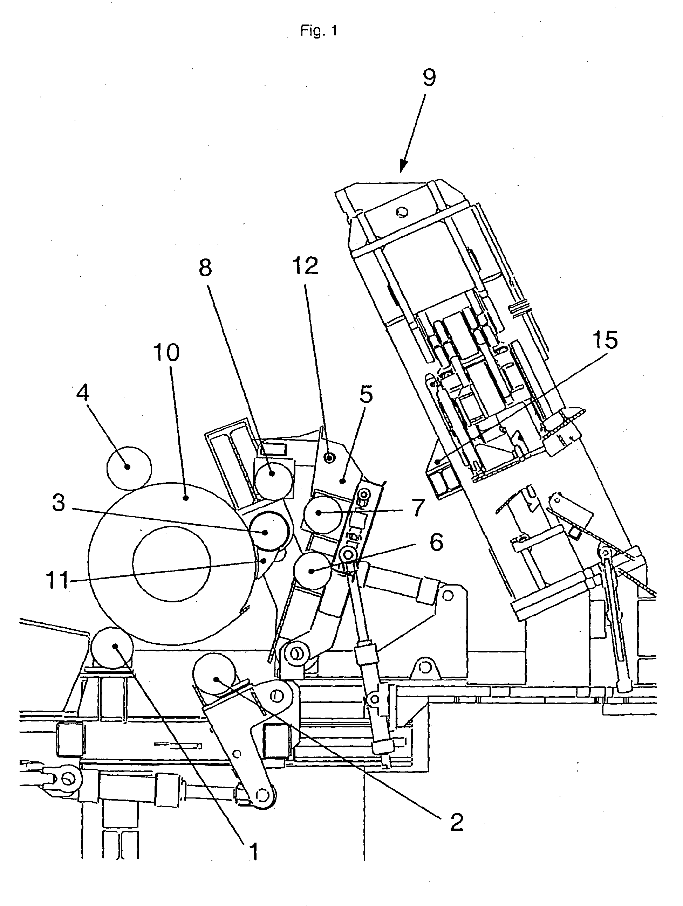

Figur 1 ist die erfindungsgemäße Vorrichtung beim Abwickeln des Bandes vom Bund (10) zu entnehmen. Das abgewickelte Bandende ist in den Figuren nicht dargestellt. Die in Fig. 1 dargestellte Situation zeigt die bereits abgesenkte Bodenrolle (2). Der Bund (10) ruht auf der Bodenrolle (1) und der eingeschwenkten Andrückrolle (3). Optional kann auch eine zusätzliche Andrückrolle (4) vorgesehen werden, sodass der Bund (10) an seiner Mantelfläche gestützt wird, wobei in etwa jeweils ein Bogenwinkel von 120° zwischen den Berührungslinien der Rollen an der Mantelfläche vorteilhaft ist. Aufgrund der Lagerung an den Rollen (1, 3, 4) ist einerseits ein Drehen des Bundes möglich und andererseits wird ein Aufspringen des Bundes (10) sicher vermieden. Es ist auch möglich mehr als eine zusätzliche Andrückrolle vorzusehen, um den Bund zusätzlich an seiner Mantelfläche führen zu können.

Es hat sich als vorteilhaft erwiesen, eine oder mehrere der Rollen, die den Bund berühren drehantreibbar auszuführen.

Mit der Andrückrolle (3) wird auch ein Öffnungsschwert (11) angestellt, sodass das Bandende vom geschlossenen Bund (10) abgezogen werden kann. Dabei wird das gekrümmte Bandende in die Führungseinrichtung (5), der die Führungsrollen (6, 7) und die Treibrolle (8) aufweist, eingeschoben. Das Bandende kann nun zwischen der Führungsrolle (7) und der Treibrolle (8) geführt bzw. gehalten werden. Aufgrund der nunmehr großen freien Länge des Bandendes, das zwischen der Bodenrolle (1) und den Rollen (7, 8) fixiert ist, kann nun die vorhandene Krümmung auch bei höherfesten oder dicken Bändern wirksam verändert werden, sodass eine Zufuhr in die Schere problemlos möglich ist. Es ist auch möglich einen massiven Anschlag (15) vorzusehen, sodass das Bandende unter Verwendung der Führungseinrichtung (5) gegen den Anschlag (15) gedrückt und dabei dessen Krümmung beeinflusst werden kann. Des Weiteren bildet der Anschlag auch einen Schutz für die Schere (9).

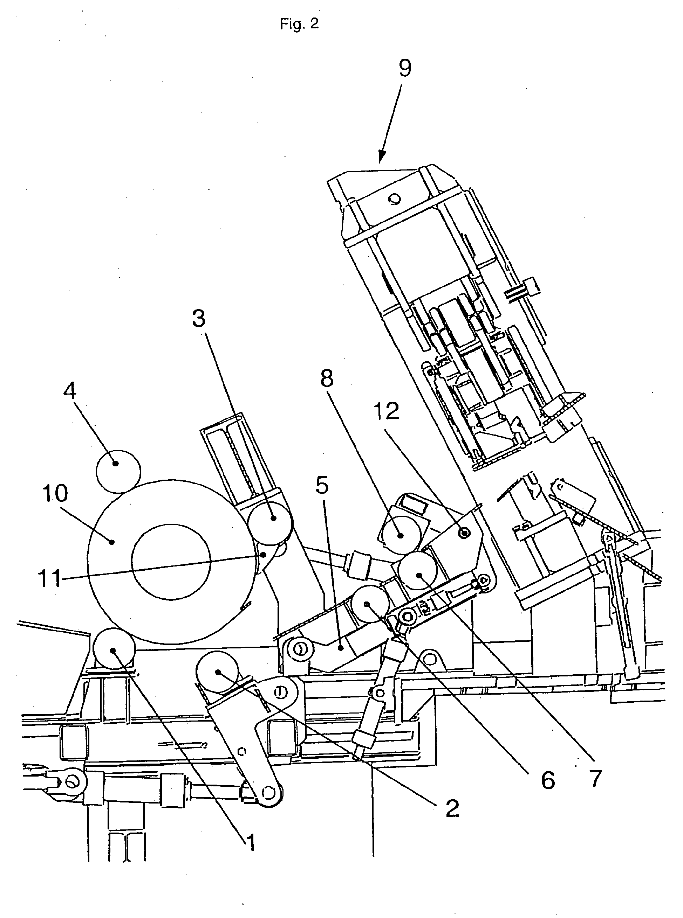

In Fig. 2 ist eine nächste Phase dargestellt, in der das Bandende bereits gekippt und deformiert wurde, sodass es der Schere (9) zugeführt werden kann. Aufgrund der sicheren Führung ist sichergestellt, dass auch etwaige elastische Rückfederungen nicht auftreten können, da das Bandende in jeder Phase geführt wird. Aufgrund der Verstellbarkeit zumindest einer der Rollen (7, 8) in einer Richtung normal und/ oder in der Ebene, gebildet aus den beiden Drehachsen dieser Rollen, kann das Bandende bei der Zufuhr zur Schere auch wirksam deformiert werden, sodass bei Probennahme eine weitgehend ebene und spannungsfreie Probe erreicht wird. Dies hat vor allem Vorteile für den Schnitt und die weitere Verarbeitung der Probe. Die Führungsrolle (7) und die Treibrolle (8) wirken dabei als Treiber, die neben der Verformung auch die Zufuhr des Bandes zur Schere und dessen Positionierung in der Schere ermöglichen.

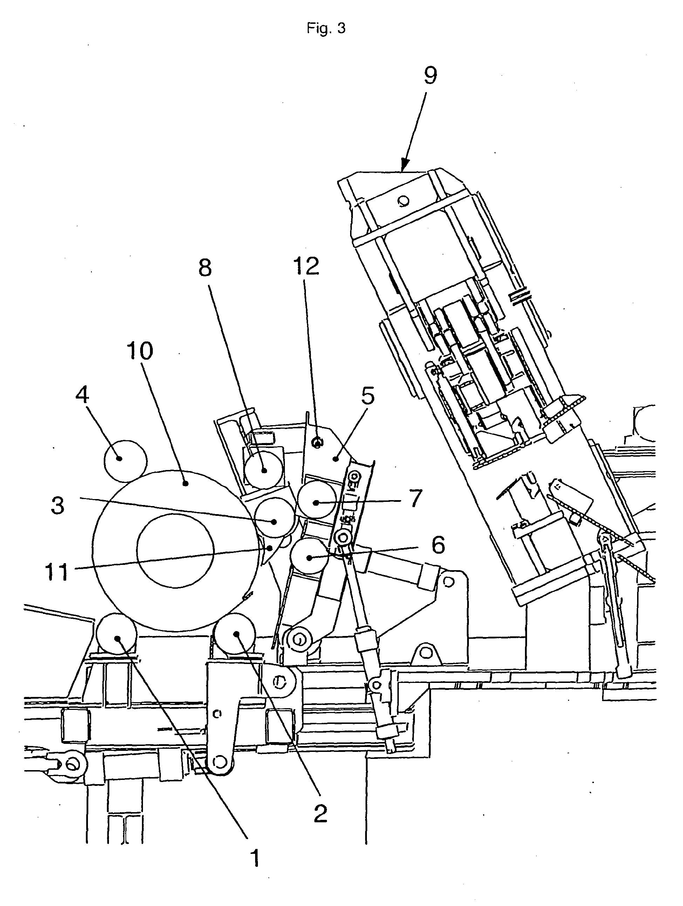

Fig. 3 zeigt die Phasen nach dem Schnitt der Probe. Das Bandende wird soweit aufgewickelt, dass das Bandende durch die Führungseinrichtung (5) hochgeschwenkt werden kann. Dabei kann das Band zwischen der Führungsrolle (7) und der Treibrolle (8) geklemmt werden. Bevor es hochgeklappt wird, kann durch die Führungsrolle (7) und die Treibrolle (8) oder durch zurückdrehen des Bundes ein Zug auf das Bandende aufgebracht werden. Dadurch wird das Bandende im Bereich der abgesenkten Bodenrolle (2) fest an den Bund angelegt. In der Folge wird die Bodenrolle (2) wieder angehoben und an die Bundmantelfläche angedrückt, sodass der Bund nun auf den beiden Bodenrollen (1, 2) aufliegt. Nun wird die Andrückrolle (3), gegebenenfalls auch die zusätzliche Andrückrolle (4), vom Bund abgehoben und die Position der abgehobenen Andrückrolle (3) fixiert.

Das verbleibende Bandende, das durch den Treiber, gebildet durch die Führungsrolle (7) und die Treibrolle (8), gehalten wird, kann nun um die Andrückrolle (3) deformiert werden, wobei die Treibrolle (8) vorher vom Bandende abgehoben wird. Derart ist es möglich, dass dem Bandende eine gewünschte Krümmung aufgeprägt wird, sodass das Bandende, nach dem es vollständig auf dem Bund aufgewickelt wurde, eng anliegt und einen geschlossenen Bund bildet.

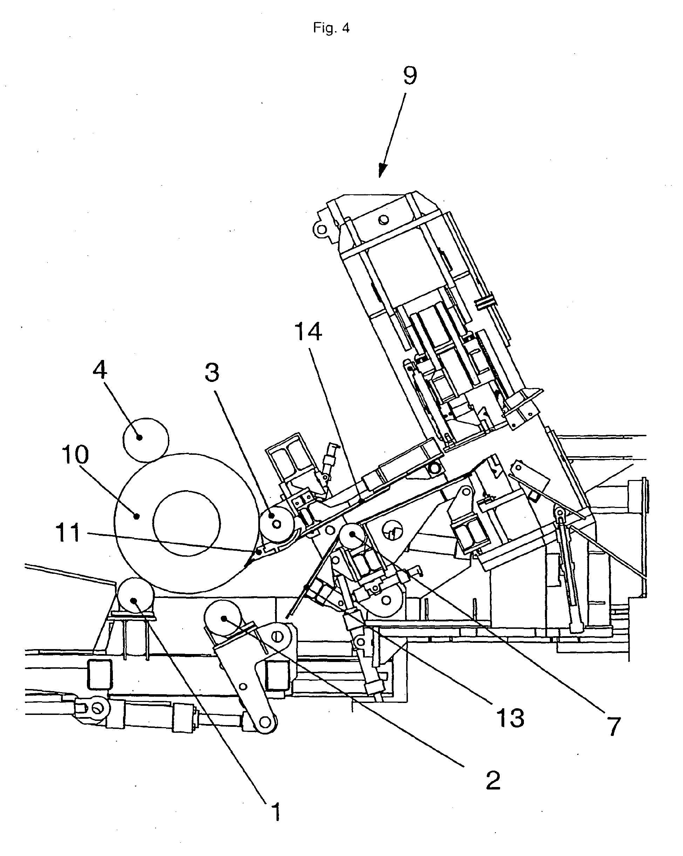

In Fig. 4 ist eine alternative Ausführung der Vorrichtung dargestellt. Neben der Führungseinrichtung (5) ist eine anstellbare Führungsplatte (13) zur Führung des Bandendes vorgesehen. Dabei kann die Führungsplatte (14) wie bei einem Trichter, der zwischen der Platte (13) und der Andrückrolle (3) beziehungsweise dem Öffnungsschwert (11) gebildet wird, die Zufuhr des Bandendes zur Führungseinrichtung (5) verbessern und stecken gebliebene Bandenden vermieden werden.

Eine weitere Variante sieht vor, dass das Bandende nicht nur durch die Führungseinrichtung (5) und das Öffnungsschwert (11) geführt wird, sondern durch ein anstellbares Führungselement (14), das das Bandende an dessen Oberseite führt. Durch die Kombination der Führungseinrichtung (5) mit der anstellbaren Führungsplatte (13) und dem anstellbaren Führungselement (14) wird eine sehr robuste und sichere, trichterartige Führung für das Bandende geschaffen, sodass eine problemfreie Zufuhr zur Schere und damit eine Probennahme bzw. eine Inspektion der Probe sichergestellt werden kann. Die Vorrichtungsteile (5, 13, 14) können auch mit Führungsrollen (6, 7) und Treibrollen (8) kombiniert werden, wobei diese auch angetrieben ausgeführt werden können.

## Patentansprüche

1. Vorrichtung zum Schopfen der Enden oder zum Abtrennen von Probestücken von zu Bunden gewickeltem Walzband, umfassend eine Schere (9), eine erste (1) und eine zweite Bodenrolle (2), deren parallel angeordnete Achsen eine im wesentlichen horizontale Ebene bilden, zur Aufnahme eines Bundes (10) mit horizontal ausgerichteter Bundachse, wobei der Abstand der Achsen kleiner als der kleinste Bunddurchmesser ist, und zumindest einer lageeinstellbaren Andrückrolle (3, 4), **dadurch gekennzeichnet, dass** die zweite Bodenrolle (2) lageeinstellbar, zum Abheben von der Bundmantelfläche ausgeführt ist, und der Bund (10) durch die erste Bodenrolle (1) und die Andrückrolle (3, 4) drehbar gelagert abstützbar ist, sodass der Bogenabschnitt zwischen den Berührungslinien an der Bundmantelfläche der ersten Bodenrolle (1) und der Andrückrolle (3, 4), größer als der Bogenabschnitt zwischen den Berührungslinien der beiden Bodenrollen (1, 2) ist, wobei zumindest die erste Bodenrolle (1) oder die Andrückrolle (3, 4) einen Drehantrieb aufweist.

2. Vorrichtung nach Anspruch 1, **dadurch gekennzeichnet, dass** der Bogenabschnitt zwischen den Berührungslinien an der Bundmantelfläche der ersten Bodenrolle (1) und der Andrückrolle (3, 4) größer 90° ist, insbesondere 120° beträgt.

3. Vorrichtung nach einem der obigen Ansprüche, **dadurch gekennzeichnet, dass** ein Öffnungsschwert (11) zum Öffnen des Bundes (10) vorgesehen ist,

4. Vorrichtung nach Anspruch 3, **dadurch gekennzeichnet, dass** das Schwert (11) verstellbar ist, wobei die Drehachse des Schwertes mit der Drehachse der Andrückrolle (3) zusammenfällt.

5. Vorrichtung nach einem der obigen Ansprüche, **dadurch gekennzeichnet, dass** eine schwenkbare Führungseinrichtung (5), die zumindest eine Führungsrolle (6, 7) aufweist, zur Führung des Bandendes zur Schere (9) und zur Verlagerung des Bandendes vorgesehen ist.

6. Vorrichtung nach Anspruch 5, **dadurch gekennzeichnet, dass** die Führungseinrichtung (5) eine anstellbare Führungsplatte (13) zur Führung des Bandendes umfasst.

7. Vorrichtung nach Anspruch 5 oder 6, **dadurch gekennzeichnet, dass** ein anstellbares Führungselement (14), zur Führung des Bandendes an dessen Oberseite, vorgesehen ist.

8. Vorrichtung nach einem der obigen Ansprüche 5 bis 7, **dadurch gekennzeichnet, dass** zumindest eine lageeinstellbare Treibrolle (8) vorgesehen ist, die zusammen mit der Führungsrolle (7) ein Treibrollenpaar, mit im Wesentlichen parallel zueinander liegenden Achsen zum Transport bzw. zur Fixierung des Bandendes bildet.

9. Vorrichtung nach Anspruch 8, **dadurch gekennzeichnet, dass** die Führungsrolle (7) und/ oder die Treibrolle (8) in einer Richtung normal zur Ebene, gebildet aus ihren Drehachsen, lageeinstellbar sind/ ist, zur Änderung des Krümmung des Bandendes, bedingt durch den Achsversatz.

10. Vorrichtung nach einem der Anspruch 8 oder 9, **dadurch gekennzeichnet, dass** die Führungsrolle (7) und/ oder die Treibrolle (8) in der Ebene, gebildet aus ihren Drehachsen, lageeinstellbar sind, zur Änderung des Spaltes zwischen den Rollen und zur Beeinflussung der seitlichen Lage des Bandendes.

11. Vorrichtung nach einem der Ansprüche 8 bis 10, **dadurch gekennzeichnet, dass** die Führungsrolle (7) und/ oder die Treibrolle (8) einen Drehantrieb aufweisen.

12. Vorrichtung nach einem der Ansprüche 8 bis 11, **dadurch gekennzeichnet, dass** die Treibrolle (8) schwenkbar um eine Achse (12) gelagert ist, wobei die Achse an der Führungseinrichtung (5) fixiert ist.

13. Vorrichtung nach einem der Ansprüche 8 bis 12, **dadurch gekennzeichnet, dass** die Führungsrolle (7) derart verstellbar ist, dass das Bandende gegen die lagefixierte und vom Bund abgehobene Andrückrolle (3) gedrückt und dabei eine Krümmung, insbesondere der Krümmung der äußeren Windung des Bundes entsprechend, einstellbar ist.

14. Vorrichtung nach einem der Ansprüche 8 bis 13, **dadurch gekennzeichnet, dass** ein Anschlag (15) an der Schere (9) als Gegenlager zum Krümmen des Bandendes vorgesehen ist.

15. Verfahren zum Schopfen der Enden oder zum Abtrennen von Probestücken von zu Bunden gewickeltem Walzband, **gekennzeichnet durch** die Schritte:
- Positionieren eines Bundes auf einer ersten und einer zweiten Bodenrolle, wobei die Bodenrollen den Bund an seiner Mantelfläche berühren,
- Einschwenken zumindest einer Andrückrolle, die den Bund an seiner Mantelfläche berührt und hinsichtlich seiner Lage fixiert,
- Absenken der zweiten Bodenrolle zur Vergrößerung des Abstandes der Berührungspunkte der ersten Bodenrolle und der Andrückrolle,
- Drehen des Bundes zum Öffnen des Bundes und Zuführen des Bandendes zu einer Schneid- und/ oder Inspektionseinrichtung,
- Schneiden des Bandendes zur Probennahme und/ oder Inspektion der Probe,
- Anlegen des verbleibenden Bandendes an den Bund.

16. Verfahren nach Anspruch 15, **dadurch gekennzeichnet, dass** die Krümmung des Bandendes vor dem Schneiden mittels einer Führungseinrichtung verändert und das Bandende im Wesentlichen gerade gerichtet wird.

17. Verfahren nach Anspruch 16, **dadurch gekennzeichnet, dass** das Bandende in der Führungseinrichtung geführt und durch Schwenken der Führungseinrichtung der Schere zugeführt wird.

18. Verfahren nach Anspruch 16 oder 17, **dadurch gekennzeichnet, dass** die Führungseinrichtung eine Treiberfunktion hat und das Bandende zur Schere führt bzw. fördert.

19. Verfahren nach einem der Ansprüche 15 bis 18, **dadurch gekennzeichnet, dass** nach dem Schneiden des Bandendes, soweit wieder aufgewickelt wird, dass eine Länge des Bandendes verbleibt, die im Wesentlichen der Länge der Führungseinrichtung entspricht.

20. Verfahren nach einem der Ansprüche 15 bis 19, **dadurch gekennzeichnet, dass** am abgeschnittenen Bandende unmittelbar eine Oberflächeninspektion erfolgt.

21. Verfahren nach einem der Ansprüche 15 bis 20, **dadurch gekennzeichnet, dass** das Bandende nach der Probennahme und/ oder Inspektion durch Schwenken der Führungseinrichtung angehoben, zwischen Führungsrolle und Treibrolle geklemmt und unmittelbar daran die zweite Bodenrolle angehoben wird.

22. Verfahren nach einem der Ansprüche 15 bis 21, **dadurch gekennzeichnet, dass** das Bandende vor dem Aufwickeln mittels der Führungsrolle um die vom Bund abgehobene und lagefixierte Andrückrolle gekrümmt wird, sodass das Bandende eine dem äußeren Bunddurchmesser entsprechende Krümmung aufweist.

## Claims

1. Apparatus for cropping the ends of or for separating test pieces from rolled strip wound into bundles, comprising shears (9), a first (1) and a second (2) bottom roller, of which the axes arranged in parallel form an essentially horizontal plane, for the reception of a bundle (10) with a horizontally oriented bundle axis, the spacing of the axes being smaller than the smallest bundle diameter, and at least one pressure roller (3, 4) of adjustable position, **characterized in that** the second bottom roller (2) is designed to be adjustable in position for lifting off from the bundle surface area, and the bundle (10) can be supported, mounted rotatably, by the first bottom roller (1) and the pressure roller (3, 4), so that the arc segment between the lines of contact of the first bottom roller (1) and of the pressure roller (3, 4) on the bundle surface area is greater than the arc segment between the lines of contact of the two bottom rollers (1, 2), at least the first bottom roller (1) or the pressure roller (3, 4) having a rotary drive.

2. Apparatus according to Claim 1, **characterized in that** the arc segment between the lines of contact of the first bottom roller (1) and of the pressure roller (3, 4) on the bundle surface area is greater than 90°, in particular amounts to 120°.

3. Apparatus according to one of the above claims, **characterized in that** an opening blade (11) is provided for opening the bundle (10).

4. Apparatus according to Claim 3, **characterized in that** the blade (11) is adjustable, the axis of rotation of the blade coinciding with the axis of rotation of the pressure roller (3).

5. Apparatus according to one of the above claims, **characterized in that** a pivotable guide device (5), which has at least one guide roller (6, 7), is provided for guiding the strip end to the shears (9) and for displacing the strip end.

6. Apparatus according to Claim 5, **characterized in that** the guide device (5) comprises an adjustable guide plate (13) for guiding the strip end.

7. Apparatus according to Claim 5 or 6, **characterized in that** an adjustable guide element (14) is provided for guiding the strip end on its top side.

8. Apparatus according to one of the above Claims 5 to 7, **characterized in that** at least one driving roller (8) of adjustable position is provided, which, together with the guide roller (7), forms a pair of driving rollers, with axes lying essentially parallel to one another, for transporting or fixing the strip end.

9. Apparatus according to Claim 8, **characterized in that** the guide roller (7) and/or the driving roller (8) are/is adjustable in position in a direction perpendicular to the plane formed from their axes of rotation, in order to change the curvature of the strip end caused by the axial offset.

10. Apparatus according to either one of Claims 8 and 9, **characterized in that** the guide roller (7) and/or the driving roller (8) are/is adjustable in position in the plane formed from their axes of rotation, in order to change the gap between the rollers and to influence the lateral position of the strip end.

11. Apparatus according to one of Claims 8 to 10, **characterized in that** the guide roller (7) and/or the driving roller (8) have/has a rotary drive.

12. Apparatus according to one of Claims 8 to 11, **characterized in that** the driving roller (8) is mounted pivotably about an axis (12), the axis being fixed to the guide device (5).

13. Apparatus according to one of Claims 8 to 12, **characterized in that** the guide roller (7) is adjustable in such a way that the strip end is pressed against the pressure roller (3) fixed in position and lifted off from the bundle, and in this case a curvature, in particular corresponding to the curvature of the outer turn of the bundle, can be set.

14. Apparatus according to one of Claims 8 to 13, **characterized in that** a stop (15) on the shears (9) is provided as a stay for curving the strip end.

15. Method for cropping the ends of or for separating test pieces from rolled strip wound into bundles, **characterized by** the steps:
- positioning of a bundle on a first and second bottom roller, the bottom rollers touching the bundle on its surface area,
- pivoting in of at least one pressure roller which touches the bundle on its surface area and fixes it in terms of its position,
- lowering of the second bottom roller in order to increase the spacing of the contact points of the first bottom roller and of the pressure roller,
- rotation of the bundle in order to open the bundle and deliver the strip end to a cutting and/or inspection device,
- cutting of the strip end for sampling and/or the inspection of the sample,
- laying of the remaining strip end onto the bundle.

16. Method according to Claim 15, **characterized in that**, before cutting, the curvature of the strip end is varied by means of a guide device, and the strip end is essentially straightened.

17. Method according to Claim 16, **characterized in that** the strip end is guided in the guide device and is delivered to the shears as a result of the pivoting of the guide device.

18. Method according to Claim 16 or 17, **characterized in that** the guide device has a driver function and guides or conveys the strip end to the shears.

19. Method according to one of Claims 15 to 18, **characterized in that,** after cutting, the strip end is wound up again to an extent such that a length of the strip end remains which corresponds essentially to the length of the guide device.

20. Method according to one of Claims 15 to 19, **characterized in that** surface inspection takes place directly on the cut-off strip end.

21. Method according to one of Claims 15 to 20, **characterized in that,** after sampling and/or inspection, the strip end is raised as a result of the pivoting of the guide device and clamped between the guide roller and driving roller, and, immediately thereafter, the second bottom roller is raised.

22. Method according to one of Claims 15 to 21, **characterized in that,** before being wound up, the strip end is curved by means of the guide roller around the pressure roller fixed in position and lifted off from the bundle, so that the strip end has a curvature corresponding to the outer bundle diameter.

## Revendications

1. Procédé pour découper les extrémités ou pour sectionner des échantillons d'une bande de laminage enroulée en bottes, comprenant des ciseaux (9), un premier (1) et un deuxième (2) rouleau de base, dont les axes parallèles forment un plan essentiellement horizontal, pour recevoir une botte (10) avec un axe de botte orienté horizontalement, la distance entre les axes étant plus petite que le plus petit diamètre de botte, et au moins un rouleau de pression (3, 4) de position ajustable, **caractérisé en ce que** le deuxième rouleau de base (2) est réalisé de manière à avoir une position ajustable, pour se soulever de la surface d'enveloppe de la botte, et la botte (10) peut être supportée de manière montée à rotation par le premier rouleau de base (1) et les rouleaux de pression (3, 4), de sorte que la portion courbe entre les lignes de contact sur la surface d'enveloppe de la botte du premier rouleau de base (1) et du rouleau de pression (3, 4) soit supérieure à la portion courbe entre les lignes de contact des deux rouleaux de base (1, 2), au moins le premier rouleau de base (1) ou le rouleau de pression (3, 4) présentant un entraînement en rotation.

2. Dispositif selon la revendication 1, **caractérisé en ce que** la portion courbe entre les lignes de contact sur la surface d'enveloppe de botte du premier rouleau de base (1) et du rouleau de pression (3, 4) est supérieure à 90°, notamment vaut 120°.

3. Dispositif selon l'une quelconque des revendications précédentes, **caractérisé en ce qu'**il est prévu une pointe d'ouverture (11) pour ouvrir la botte (10).

4. Dispositif selon la revendication 3, **caractérisé en ce que** la pointe (11) est réglable, l'axe de rotation de la pointe coïncidant avec l'axe de rotation du rouleau de pression (3).

5. Dispositif selon l'une quelconque des revendications précédentes, **caractérisé en ce qu'**un dispositif de guidage pivotant (5), qui présente au moins un rouleau de guidage (6, 7), est prévu pour guider l'extrémité de la bande vers les ciseaux (9) et pour déplacer l'extrémité de la bande.

6. Dispositif selon la revendication 5, **caractérisé en ce que** le dispositif de guidage (5) comprend une plaque de guidage inclinable (13) pour guider l'extrémité de la bande.

7. Dispositif selon la revendication 5 ou 6, **caractérisé en ce qu'**il est prévu un élément de guidage inclinable (14) pour le guidage de l'extrémité de la bande contre son côté supérieur.

8. Dispositif selon l'une quelconque des revendications précédentes 5 à 7, **caractérisé en ce qu'**on prévoit au moins un rouleau d'entraînement (8) de position ajustable qui forme conjointement avec le rouleau de guidage (7) une paire de rouleaux d'entraînement avec des axes sensiblement parallèles pour le transport ou la fixation de l'extrémité de la bande.

9. Dispositif selon la revendication 8, **caractérisé en ce que** le rouleau de guidage (7) et/ou le rouleau d'entraînement (8) sont ajustables dans une direction perpendiculaire au plan formé par leurs axes de rotation, pour faire varier la courbure de l'extrémité de la bande, provoquée par le décalage des axes.

10. Dispositif selon l'une quelconque des revendications 8 ou 9, **caractérisé en ce que** le rouleau de guidage (7) et/ou le rouleau d'entraînement (8) sont ajustables dans le plan formé par leurs axes de rotation, pour faire varier l'espace entre les rouleaux et pour influencer la position latérale de l'extrémité de la bande.

11. Dispositif selon l'une quelconque des revendications 8 à 10, **caractérisé en ce que** le rouleau de guidage (7) et/ou le rouleau d'entraînement (8) présentent un entraînement en rotation.

12. Dispositif selon l'une quelconque des revendications 8 à 11, **caractérisé en ce que** le rouleau d'entraînement (8) est monté de manière à pouvoir pivoter autour d'un axe (12), l'axe étant fixé sur le dispositif de guidage (5).

13. Dispositif selon l'une quelconque des revendications 8 à 12, **caractérisé en ce que** le rouleau de guidage (7) est déplaçable de telle sorte que l'extrémité de la bande soit pressée contre le rouleau de pression (3) fixé en position et soulevé de la botte, et qu'une courbure, en particulier correspondant à la courbure de l'enroulement extérieur de la botte, puisse être ajustée.

14. Dispositif selon l'une quelconque des revendications 8 à 13, **caractérisé en ce qu'**une butée (15) est prévue sur les ciseaux (9) en tant que contre-palier pour la courbure de l'extrémité de la bande.

15. Procédé pour découper les extrémités ou pour sectionner des échantillons d'une bande de laminage enroulée en bottes, **caractérisé par** les étapes suivantes :
- positionnement d'une botte sur un premier et un deuxième rouleau de base, les rouleaux de base venant en contact avec la botte au niveau de sa surface d'enveloppe,
- pivotement vers l'intérieur d'au moins un rouleau de pression, qui vient en contact avec la botte au niveau de sa surface d'enveloppe et qui la fixe en position,
- abaissement du deuxième rouleau de base pour augmenter la distance entre les points de contact du premier rouleau de base et du rouleau de pression,
- rotation de la botte pour ouvrir la botte et acheminer l'extrémité de la bande à un dispositif de découpage et/ou d'inspection,
- découpage de l'extrémité de la bande pour prélever un échantillon et/ou pour inspecter l'échantillon,
- application de l'extrémité de bande restante contre la botte.

16. Procédé selon la revendication 15, **caractérisé en ce que** la courbure de l'extrémité de la bande est modifiée avant le découpage au moyen d'un dispositif de guidage et l'extrémité de la bande est orientée essentiellement en ligne droite.

17. Procédé selon la revendication 16, **caractérisé en ce que** l'extrémité de la bande est guidée dans le dispositif de guidage et est acheminée aux ciseaux par pivotement du dispositif de guidage.

18. Procédé selon la revendication 16 ou 17, **caractérisé en ce que** le dispositif de guidage a une fonction d'entraînement et guide ou transporte l'extrémité de la bande aux ciseaux.

19. Procédé selon l'une quelconque des revendications 15 à 18, **caractérisé en ce qu'**après le découpage de l'extrémité de la bande, si celle-ci est à nouveau enroulée, il subsiste une longueur d'extrémité de bande, qui correspond essentiellement à la longueur du dispositif de guidage.

20. Procédé selon l'une quelconque des revendications 15 à 19, **caractérisé en ce que** l'on effectue une inspection de la surface directement sur l'extrémité de la bande découpée.

21. Procédé selon l'une quelconque des revendications 15 à 20, **caractérisé en ce que** l'extrémité de la bande est soulevée après le prélèvement de l'échantillon et/ou l'inspection par pivotement du dispositif de guidage, est serrée entre le rouleau de guidage et le rouleau d'entraînement, et immédiatement après, le deuxième rouleau de base est soulevé.

22. Procédé selon l'une quelconque des revendications 15 à 21, **caractérisé en ce que** l'extrémité de la bande est courbée avant l'enroulement au moyen du rouleau de guidage autour du rouleau de pression soulevé de la botte et fixé en position, de sorte que l'extrémité de la bande présente une courbure correspondant au diamètre extérieur de la botte.
